# EUROPEAN PATENT SPECIFICATION

(11) **EP 3 438 733 B1**
(45) Date of publication and mention of the grant of the patent: **19.07.2023**
(21) Application number: 17775301.9
(22) Date of filing: 29.03.2017
(51) Int. Cl.: G02F 1/1343, G02F 1/1334, G02F 1/13, B32B 9/00, B32B 15/04, G02B 5/26, G06F 3/041, H01B 5/14

(54) **LIQUID-CRYSTAL LIGHT-ADJUSTING MEMBER AND LIQUID-CRYSTAL LIGHT-ADJUSTING ELEMENT**
FLÜSSIGKRISTALL-LICHTEINSTELLVORRICHTUNG UND FLÜSSIGKRISTALL-LICHTEINSTELLELEMENT
DISPOSITIF DE RÉGLAGE DE LUMIÈRE À CRISTAUX LIQUIDES ET ÉLÉMENT DE RÉGLAGE DE LUMIÈRE À CRISTAUX LIQUIDES

(30) Priority: 01.04.2016 JP 2016074471; 02.09.2016 JP 2016172065; 28.03.2017 JP 2017063684; 28.03.2017 JP 2017063704
(43) Date of publication of application: 06.02.2019
(73) Proprietor: Nitto Denko Corporation, Ibaraki-shi, Osaka 567-8680 (JP)
(72) Inventor: FUJINO, Nozomi, Ibaraki-shi Osaka 567-8680 (JP); NASHIKI, Tomotake, Ibaraki-shi Osaka 567-8680 (JP); TAKEMOTO, Mitsunobu, Ibaraki-shi Osaka 567-8680 (JP)
(74) Representative: Grünecker Patent- und Rechtsanwälte PartG mbB
(86) International application number: PCT/JP2017/013055
(87) International publication number: WO 2017/170767

(56) References cited:
- EP-A1- 2 985 145
- JP-A- H09 281 517
- JP-A- 2002 014 364
- JP-A- 2004 050 643
- JP-A- 2005 093 441
- JP-A- 2006 164 961
- KR-A- 20150 105 249

## Description

### TECHNICAL FIELD

The present invention relates to a liquid crystal light adjusting member crystal light adjusting element including the liquid crystal light adjusting member.

### BACKGROUND ART

Recently, in view of reduction in a cooling and heating load, and design property, a demand for a liquid crystal light adjusting element represented by smart windows or the like has been increased. The liquid crystal light adjusting element is used for various uses such as window glasses for buildings and vehicles, partitions, and interior decoration.

As the liquid crystal light adjusting element, for example, a liquid crystal light adjusting element that sequentially includes a substrate, an electrically conductive film, and a liquid crystal-resin composite has been proposed (ref: for example, the following Patent Document 1).

### Citation List

### Patent Document

Patent Document 1: Japanese Unexamined Patent Publication No. 2009-133921

### SUMMARY OF THE INVENTION

### PROBLEM TO BE SOLVED BY THE INVENTION

Meanwhile, in the liquid crystal light adjusting element of Patent Document 1, as the electrically conductive film, an indium tin composite oxide (ITO) is used. The indium tin composite oxide (ITO) has low near infrared ray reflectance properties, so that it has poor heat shielding properties. Thus, there is a disadvantage that when the liquid crystal light adjusting element of Patent Document 1 is used in the environment influenced by the sunlight (outdoors or the like), the liquid crystal-resin composite of the liquid crystal light adjusting element of Patent Document 1 is deteriorated by heat of the sunlight.

To eliminate such a disadvantage, it has been considered that an IR reflective layer for shielding a heat ray such as the sunlight is bonded to the surface of a substrate. However, in this case, there is a disadvantage that the thickness of the liquid crystal light adjusting element is increased corresponding to the thickness of the IR reflective layer, and the production cost is also increased. KR 2015 0105249 A discloses aliquid crystal light adjusting member ("light modulation device") sequentially comprising a transparent substrate ("base layer" which may be a "glass film"), a light transmitting electrically conductive layer ("multiple layer"), and a liquid crystal light adjusting layer ("light modulating layer"), wherein the light transmitting electrically conductive layer sequentially includes a first inorganic oxide layer ("first oxide layer"), a metal layer ("metallic layer"), and a second inorganic oxide layer ("second oxide layer"), and wherein the first inorganic oxide layer includes indium composite oxide. According to KR 2015 0105249 A, the first oxide layer and the second oxide layer in one example may include the metal oxide including the metal including the antimony (Sb), the barium (Ba), the gallium (Ga), the germanium (Ge), the hafnium (Hf), the indium (In), the lanthanum (La), the magnesium (Mg), the selenium (Se), the silicon (Si), the tantalum (Ta), the titanium (Ti), the vanadium (V), the yttrium (Y), the zinc (Zn), and at least one kind selected from the group consisting of the zirconium (Zr). KR 2015 0105249 A also teaches to control the degree of crystallization of the inorganic oxide layers by controlling the deposition conditions for each layer, so that the refractive indices of the layers can be different even with the same thickness and material.

JP 2004 050643 A relates to an IR reflective composite electrode for an LC element. It has three layers, with a transparent metal oxide-based conductive layer provided on both sides of a metal-based conductive layer. According to JP 2004 050643 A, as the metal-oxide based transparent conductive layer, an amorphous indium oxide containing at least one selected from tungsten, silicon and germanium (Examples 1-36; Tables 1-6) is preferred over indium-tin oxide (Comparative Examples 1-16; Tables 7, 8) in terms of electric resistance and corrosivity.

EP 2 985 145 A1 also refers to an IR reflective composite layer for a window, which consists of three layers, with a transparent metal oxide-based conductive layer on both sides of a metal-based conductive layer. EP 2 985 145 A1 clarifies that ITO as a metal oxide-based conductive layer (Comparative Example 7) is at a disadvantage compared to other metal oxides such as an indium-zinc composite oxide (IZO) (Invention Example 1) or a zinc-tin composite oxide (ZTO) (Invention Example 2) in terms of visible ray transmittance and durability.

An object of the present invention is to provide a liquid crystal light adjusting member having excellent near infrared ray reflectance properties without bonding an IR reflective layer to the surface of a transparent substrate, a light transmitting electrically conductive film used for the liquid crystal light adjusting member, and a liquid crystal light adjusting element including the liquid crystal light adjusting member.

### MEANS FOR SOLVING THE PROBLEM

The present invention provides a liquid crystal light adjusting member according to appended independent claim 1.

In the liquid crystal light adjusting member, the light transmitting electrically conductive layer includes the metal layer having a high reflectance in a near infrared ray region. Thus, the light transmitting electrically conductive layer has, for example, a higher average reflectance of the near infrared ray compared to a case of being made of only an electrically conductive oxide; is capable of efficiently shielding a heat ray such as the sunlight from the liquid crystal light adjusting layer; and is capable of being used in the environment influenced by the sunlight (outdoors or the like).

The liquid crystal light adjusting member has excellent near infrared ray reflectance properties without bonding an IR reflective layer to the surface of the transparent substrate. Thus, the thickness of the liquid crystal light adjusting member can be reduced, and the production cost can be also reduced.

The present invention further provides a liquid crystal light adjusting element according to appended claim 2.

The liquid crystal light adjusting element according to appended claim 2 includes the liquid crystal light adjusting member according to appended claim 1. Thus, the liquid crystal light adjusting element according to appended claim 2 is capable of efficiently shielding a heat ray such as the sunlight from the liquid crystal light adjusting layer and is capable of being used in the environment influenced by the sunlight (outdoors or the like).

The liquid crystal light adjusting element according to appended claim 2 includes the liquid crystal light adjusting member according to appended claim 1. Thus, the thickness of the liquid crystal light adjusting element according to appended claim 2 can be reduced, and the production cost can be also reduced.

### EFFECT OF THE INVENTION

According to the liquid crystal light adjusting member and the liquid crystal light adjusting element including the liquid crystal light adjusting member of the present invention, excellent near infrared ray reflectance properties can be achieved without bonding an IR reflective layer to the surface of a transparent substrate. Thus, the thickness of the liquid crystal light adjusting member can be reduced, and the production cost can be also reduced.

### BRIEF DESCRIPTION OF THE DRAWINGS

FIG 1 shows a cross-sectional view of one embodiment of a liquid crystal light adjusting member of the present invention.
FIGS. 2A to 2B show partially enlarged views of a light transmitting electrically conductive film shown in FIG. 1:

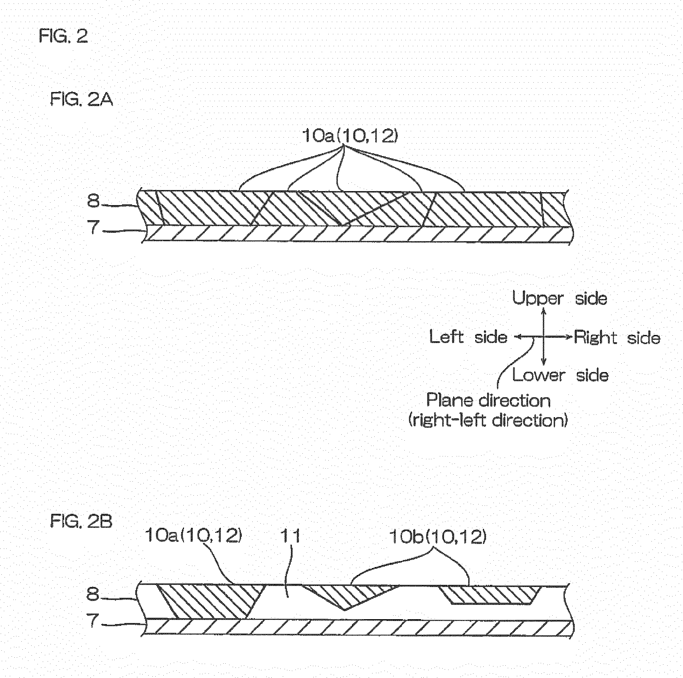

   FIG. 2A illustrating a schematic diagram when a second inorganic oxide layer is a perfect crystalline film and
   FIG. 2B illustrating a schematic diagram when the second inorganic oxide layer is a semicrystalline film.

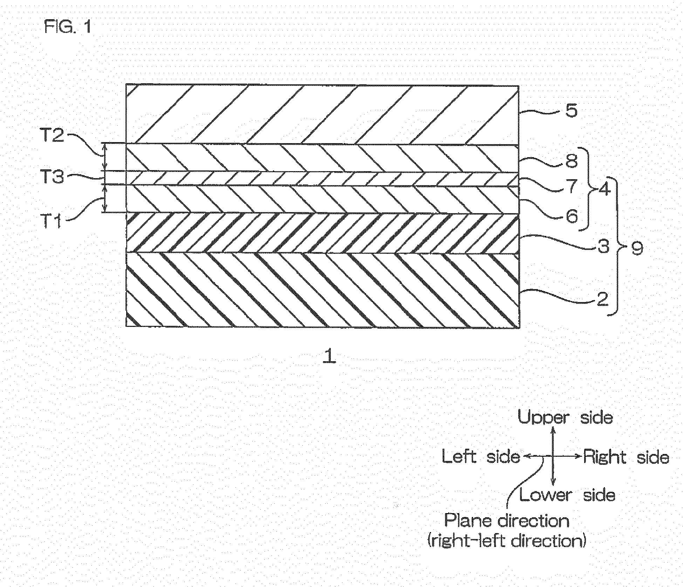

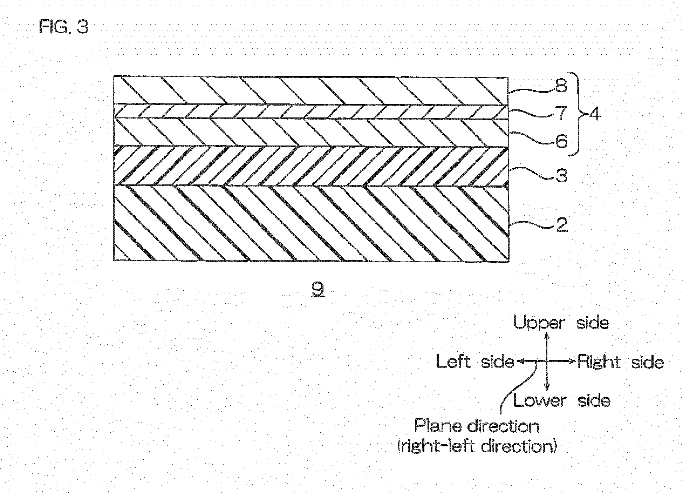

FIG. 3 shows a cross-sectional view of one embodiment of a light transmitting electrically conductive film of the present invention constituting the liquid crystal light adjusting member shown in FIG. 1.

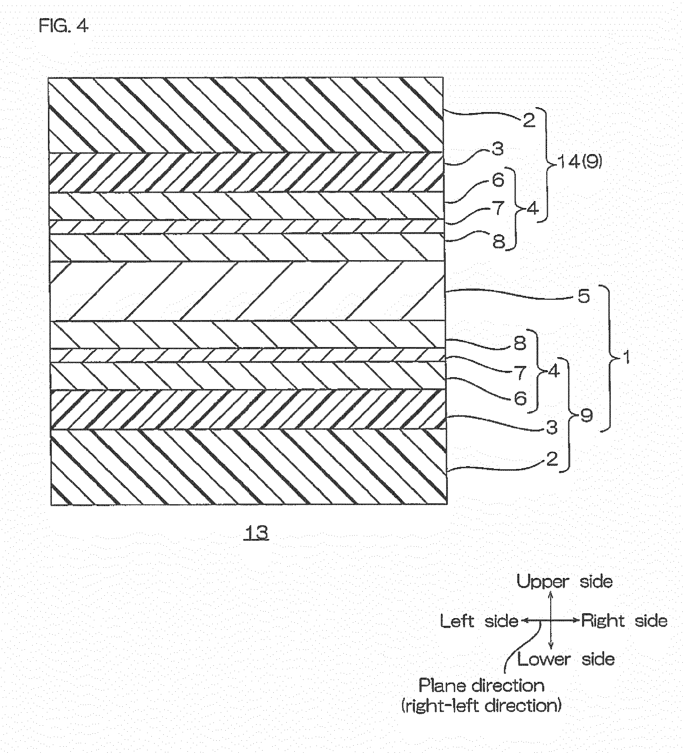

FIG. 4 shows a cross-sectional view of one embodiment of a liquid crystal light adjusting element of the present invention including the liquid crystal light adjusting member shown in FIG. 1.

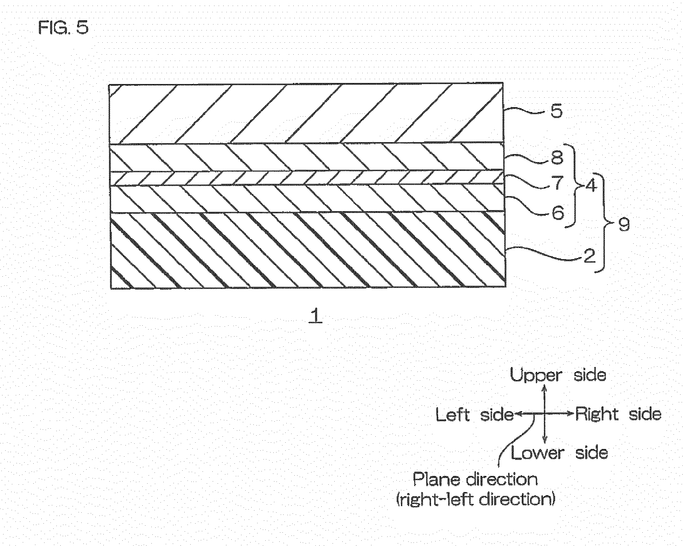

FIG. 5 shows a modified example of the liquid crystal light adjusting member, and shows a cross-sectional view of the liquid crystal light adjusting member in which a first inorganic oxide layer is directly disposed on the upper surface of a transparent substrate.

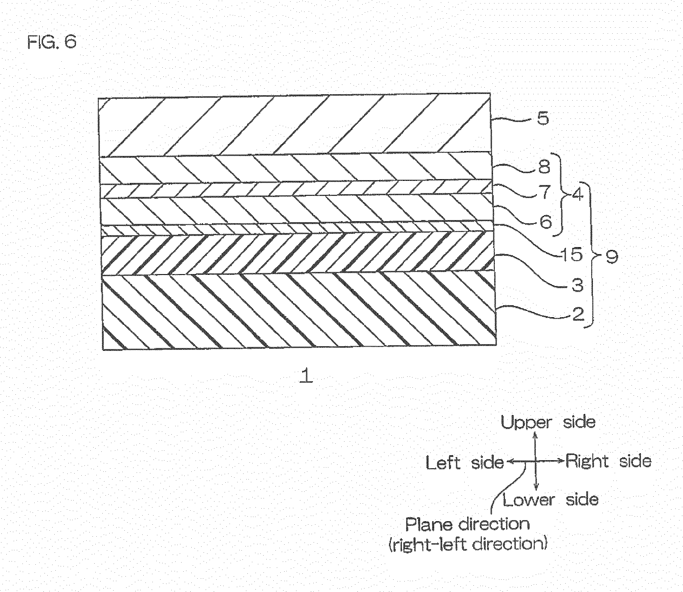

FIG. 6 shows a modified example of the liquid crystal light adjusting member, and shows a cross-sectional view of the liquid crystal light adjusting member in which an inorganic layer is interposed between a protecting layer and the first inorganic oxide layer.

### DESCRIPTION OF EMBODIMENTS

In FIG. 1, the up-down direction on the plane of the sheet is referred to as an up-down direction (thickness direction, first direction), the upper side on the plane of the sheet is referred to as an upper side (one side in the thickness direction, one side in the first direction), and the lower side on the plane of the sheet is referred to as a lower side (the other side in the thickness direction, the other side in the first direction). In FIG. 1, the right-left direction on the plane of the sheet is referred to as a right-left direction (width direction, second direction perpendicular to the first direction), the left side on the plane of the sheet is referred to as a left side (one side in the second direction), and the right side on the plane of the sheet is referred to as a right side (the other side in the second direction). In FIG. 1, the paper thickness direction is referred to as a front-rear direction (third direction perpendicular to the first and second directions), the near side on the plane of the sheet is referred to as a front side (one side in the third direction), and the far side on the plane of the sheet is referred to as a rear side (the other side in the third direction). To be specific, the directions are in conformity with direction arrows of each figure.

### 1. Liquid Crystal Light Adjusting Member

A liquid crystal light adjusting member forms a film shape (including a sheet shape) having a predetermined thickness, extends in a predetermined direction perpendicular to the thickness direction (the front-rear direction and the right-left direction, that is, a plane direction), and has a flat upper surface and a flat lower surface (two main surfaces). The liquid crystal light adjusting member is, for example, one component of a light adjusting panel or the like provided in a light adjusting device, that is, not the light adjusting device. That is, the liquid crystal light adjusting member is a component for fabricating a light adjusting device or the like, does not include a light source such as LED and an external power source, and is an industrially available device whose component alone can be circulated.

To be specific, as shown in FIG. 1, a liquid crystal light adjusting member 1 is a laminate film that sequentially includes a transparent substrate 2, a protecting layer 3, a light transmitting electrically conductive layer 4, and a liquid crystal light adjusting layer 5 in the thickness direction. That is, the liquid crystal light adjusting member 1 includes the transparent substrate 2, the protecting layer 3 that is disposed at the upper side of the transparent substrate 2, the light transmitting electrically conductive layer 4 that is disposed at the upper side of the protecting layer 3, and the liquid crystal light adjusting layer 5 that is disposed at the upper side of the light transmitting electrically conductive layer 4. Preferably, the liquid crystal light adjusting member 1 is made of only the transparent substrate 2, the protecting layer 3, the light transmitting electrically conductive layer 4, and the liquid crystal light adjusting layer 5. In the following, each of the layers is described in detail.

### 2. Transparent Substrate

The transparent substrate 2 is a part of an electrode substrate of the liquid crystal light adjusting member 1, the lowermost layer of the liquid crystal light adjusting member 1, and a supporting material that ensures the mechanical strength of the liquid crystal light adjusting member 1. The transparent substrate 2, along with the protecting layer 3, supports the light transmitting electrically conductive layer 4 and the liquid crystal light adjusting layer 5.

The transparent substrate 2 is, for example, made of a polymeric film.

The polymeric film has transparency and flexibility. Examples of a material of the polymeric film include polyester resins such as polyethylene terephthalate (PET), polybutylene terephthalate, and polyethylene naphthalate; (meth)acrylic resins (acrylic resin and/or methacrylic resin) such as polymethacrylate; olefin resins such as polyethylene, polypropylene, and cycloolefin polymer; polycarbonate resin; polyether sulfone resin; polyarylate resin; melamine resin; polyamide resin; polyimide resin; cellulose resin; polystyrene resin; and norbornene resin. These polymeric films can be used alone or in combination of two or more. In view of transparency, flexibility, heat resistance, and mechanical properties, preferably, an olefin resin and a polyester resin are used, more preferably, a cycloolefin polymer and a PET are used.

The thickness of the transparent substrate 2 is, for example, 2 µm or more, preferably 20 µm or more, and for example, 300 µm or less, preferably 200 µm or less, more preferably 150 µm or less.

In view of retaining amorphous properties of a first inorganic oxide layer 6, preferably, the transparent substrate 2 contains a small amount of water. That is, in the transparent substrate 2, preferably, the polymeric film contains the water.

### 3. Protecting Layer

The protecting layer 3 is a part of the electrode substrate of the liquid crystal light adjusting member 1, and a scratch protecting layer for suppressing a scratch (that is, for obtaining excellent scratch resistance) on the upper surfaces of the light transmitting electrically conductive layer 4 and the liquid crystal light adjusting layer 5. The protecting layer 3 is also an optically adjusting layer that adjusts optical properties of the liquid crystal light adjusting member 1 so as to suppress visual recognition of a pattern, when the light transmitting electrically conductive layer 4 is formed into a pattern shape such as wiring pattern.

The protecting layer 3 has a film shape (including a sheet shape), and is disposed on the entire upper surface of the transparent substrate 2 so as to be in contact with the upper surface of the transparent substrate 2.

The protecting layer 3 is formed from a resin composition.

The resin composition contains, for example, a resin, particles, or the like. The resin composition preferably contains a resin, more preferably is made of only a resin.

Examples of the resin include curable resin and thermoplastic resin (for example, polyolefin resin). Preferably, a curable resin is used.

Examples of the curable resin include active energy ray curable resin that cures by application of an active energy ray (to be specific, ultraviolet ray, electron ray, or the like) and thermosetting resin that cures by heating. Preferably, an active energy ray curable resin is used.

An example of the active energy ray curable resin includes a polymer having a functional group having a polymerizable carbon-carbon double bonding in a molecule. Examples of the functional group include vinyl group and (meth)acryloyl group (methacryloyl group and/or acryloyl group).

An example of the active energy ray curable resin includes a (meth)acrylic resin (acrylic resin and/or methacrylic resin) having a functional group in a side chain.

These resins can be used alone or in combination of two or more.

Examples of the particles include inorganic particles and organic particles. Examples of the inorganic particles include silica particles, metal oxide particles made of zirconium oxide, titanium oxide, or the like, and carbonate particles such as calcium carbonate. Examples of the organic particles include cross-linking acrylic resin particles.

The thickness of the protecting layer 3 is, for example, 0.01 µm or more, preferably 1 µm or more, and for example, 10 µm or less, preferably 5 µm or less. The thickness of the protecting layer 3 is, for example, measured by cross-sectional observation with a transmission electron microscope (TEM).

### 4. Light Transmitting Electrically Conductive Layer

The light transmitting electrically conductive layer 4 is a part of the electrode substrate of the liquid crystal light adjusting member 1, and an electrically conductive layer for generating an electric field in the liquid crystal light adjusting layer 5 by applying an electric current from an external power source (not shown). The light transmitting electrically conductive layer 4 is also a transparent electrically conductive layer.

As shown in FIG. 1, the light transmitting electrically conductive layer 4 has a film shape (including a sheet shape), and is disposed on the entire upper surface of the protecting layer 3 so as to be in contact with the upper surface of the protecting layer 3.

The light transmitting electrically conductive layer 4 sequentially includes the first inorganic oxide layer 6, a metal layer 7, and a second inorganic oxide layer 8 from the side of the transparent substrate 2 in the thickness direction. That is, the light transmitting electrically conductive layer 4 includes the first inorganic oxide layer 6 that is disposed on the protecting layer 3, the metal layer 7 that is disposed on the first inorganic oxide layer 6, and the second inorganic oxide layer 8 that is disposed on the metal layer 7. Preferably, the light transmitting electrically conductive layer 4 is made of only the first inorganic oxide layer 6, the metal layer 7, and the second inorganic oxide layer 8.

The surface resistance value of the light transmitting electrically conductive layer 4 is, for example, 40 Ω/□ or less, preferably 30 Ω/□ or less, more preferably 20 Ω/□ or less, further more preferably 15 Ω/□ or less, and for example, 0.1 Ω/□ or more, preferably 1 Ω/□ or more, more preferably 5 Ω/□ or more.

The surface resistance value of the light transmitting electrically conductive layer 4 with respect to the surface of the light transmitting electrically conductive layer 4 of a light transmitting electrically conductive film 9 is, for example, obtained by measurement in conformity with a four point probe method of JIS K 7194 (in 1994).

The specific resistance of the light transmitting electrically conductive layer 4 is, for example, 2.5 × 10⁻⁴ Ω·cm or less, preferably 2.0 × 10⁻⁴ Ω·cm or less, more preferably 1.1 × 10⁻⁴ Ω·cm or less, and for example, 0.01 × 10⁻⁴ Ω·cm or more, preferably 0.1 × 10⁻⁴ Ω·cm or more, more preferably 0.5 × 10⁻⁴ Ω·cm or more.

The specific resistance of the light transmitting electrically conductive layer 4 is calculated by using the thickness of the light transmitting electrically conductive layer 4 (the total thickness of the first inorganic oxide layer 6, the metal layer 7, and the second inorganic oxide layer 8) and the surface resistance value of the light transmitting electrically conductive layer 4.

The average reflectance of the near infrared ray (wavelength of 850 to 2500 nm) of the light transmitting electrically conductive layer 4 is, for example, 10% or more, preferably 20% or more, more preferably 50% or more, and for example, 95% or less, preferably 90% or less.

The thickness of the light transmitting electrically conductive layer 4, that is, the total thickness of the first inorganic oxide layer 6, the metal layer 7, and the second inorganic oxide layer 8 is, for example, 20 nm or more, preferably 40 nm or more, more preferably 60 nm or more, further more preferably 80 nm or more, and for example, 150 nm or less, preferably 120 nm or less, more preferably 100 nm or less.

### 5. First Inorganic Oxide Layer

In the following paragraphs under the chapter "First Inorganic Oxide Layer" a large number of different materials for forming the first inorganic oxide layer are mentioned, but only those containing an indium tin composite oxide fall within the scope of protection of the appended claims.

The first inorganic oxide layer 6 is a barrier layer that prevents the entry of hydrogen derived from the water contained in the transparent substrate 2 and carbon derived from an organic substance contained in the protecting layer 3 into the metal layer 7. Furthermore, the first inorganic oxide layer 6, along with the second inorganic oxide layer 8 to be described later, is also an optically adjusting layer for suppressing the visible ray reflectance of the metal layer 7, and improving the visible ray transmittance of the light transmitting electrically conductive layer 4. The first inorganic oxide layer 6, along with the metal layer 7 to be described later, is preferably an electrically conductive layer that imparts electrically conductive properties to the light transmitting electrically conductive layer 4, more preferably a transparent electrically conductive layer.

The first inorganic oxide layer 6 is the lowermost layer of the light transmitting electrically conductive layer 4, has a film shape (including a sheet shape), and is disposed on the entire upper surface of the protecting layer 3 so as to be in contact with the upper surface of the protecting layer 3.

An example of an inorganic oxide that forms the first inorganic oxide layer 6 includes a metal oxide formed from at least one kind of metal selected from the group consisting of In, Sn, Zn, Ga, Sb, Ti, Si, Zr, Mg, Al, Au, Ag, Cu, Pd, W, Fe, Pb, Ni, Nb, and Cr. The metal oxide can be also further doped with a metal atom represented by the above-described group as needed.

As the inorganic oxide, in view of reduction of the surface resistance value and ensuring excellent transparency, preferably, an oxide containing an indium oxide (indium oxide-containing oxide) is used. The indium oxide-containing oxide may contain only indium (In) as a metal element, or may contain a (semi)metal element other than the indium (In). In the indium oxide-containing oxide, a main metal element is preferably the indium (In). The indium oxide-containing oxide in which the main metal element is the indium has an excellent barrier function, and preferably easily suppresses corrosion of the metal layer 7 influenced by water or the like.

By containing a single or a plurality of (semi)metal elements as an impurity element, the indium oxide-containing oxide can furthermore improve electrically conductive properties, transparency, and durability. The ratio of the number of atoms contained in the impurity metal element to the number of atoms of the main metal element In in the first inorganic oxide layer 6 (number of atoms of impurity metal element/number of atoms of In) is, for example, below 0.50, preferably 0.40 or less, more preferably 0.30 or less, further more preferably 0.20 or less, and for example, 0.01 or more, preferably 0.05 or more, more preferably 0.10 or more. In this manner, an inorganic oxide layer having excellent transparency and excellent moist heat durability can be obtained.

To be specific, examples of the indium oxide-containing oxide include indium zinc composite oxide (IZO), indium gallium composite oxide (IGO), indium gallium zinc composite oxide (IGZO), and indium tin composite oxide (ITO), but the claimed invention is restricted to the use of an indium tin composite oxide (ITO) . The "ITO" in the present specification may be a composite oxide containing at least indium (In) and tin (Sn), and may also contain an additional component other than these. An example of the additional component includes a metal element other than In and Sn, and a metal element represented by the above-described group and a combination of these may be used. The additional component content is not particularly limited, and is, for example, 5 weight% or less.

The tin oxide (SnO₂) content contained in the ITO with respect to the total amount of the tin oxide and the indium oxide (In₂O₃) is, for example, 0.5 mass% or more, preferably 3 mass% or more, more preferably 6 mass% or more, further more preferably 8 mass% or more, particularly preferably 10 mass% or more, and for example, 35 mass% or less, preferably 20 mass% or less, more preferably 15 mass% or less, further more preferably 13 mass% or less. The indium oxide (In₂O₂) content is the remaining portion of the tin oxide (SnO₂) content.

The ratio (Sn/In) of the number of atoms of Sn to that of In contained in the ITO is, for example, 0.004 or more, preferably 0.02 or more, more preferably 0.03 or more, further more preferably 0.04 or more, particularly preferably 0.05 or more, and for example, 0.4 or less, preferably 0.3 or less, more preferably 0.2 or less, further more preferably 0.10 or less. The ratio of number of atoms of Sn to that of In can be obtained by an X-ray photoelectron spectroscopy (ESCA: Electron Spectroscopy for Chemical Analysis). By setting the ratio of the number of atoms of Sn to that of In within the above-described range, a film quality having excellent environmental reliability can be easily obtained.

The first inorganic oxide layer 6 preferably does not contain crystal particles. That is, the first inorganic oxide layer 6 is preferably amorphous. In this manner, the wettability of the surface of the first inorganic oxide layer 6 is improved, and the metal layer 7 to be described later can be more surely thinly and uniformly formed on the upper surface of the first inorganic oxide layer 6. Thus, the film quality of the light transmitting electrically conductive layer 4 is excellent, and the moist heat durability can be improved.

In the present invention, "not containing crystal particles" means that when the first inorganic oxide layer 6 is observed by using a cross-section TEM image at a magnification of 200,000 times, the crystal particles are not observed in a range of 500 nm in the plane direction perpendicular to the thickness direction (the right-left direction or the front-rear direction).

The content ratio of the inorganic oxide in the first inorganic oxide layer 6 is, for example, 95 mass% or more, preferably 98 mass% or more, more preferably 99 mass% or more, and for example, 100 mass% or less.

A thickness T1 of the first inorganic oxide layer 6 is, for example, 5 nm or more, preferably 20 nm or more, more preferably 30 nm or more, and for example, 100 nm or less, preferably 60 nm or less, more preferably 50 nm or less. When the thickness T1 of the first inorganic oxide layer 6 is within the above-described range, the visible ray transmittance of the light transmitting electrically conductive layer 4 can be easily adjusted to a high standard. The thickness T1 of the first inorganic oxide layer 6 is, for example, measured by cross-sectional observation with a transmission electron microscope (TEM).

### 6. Metal Layer

The metal layer 7, along with the first inorganic oxide layer 6 and the second inorganic oxide layer 8, is an electrically conductive layer that imparts electrically conductive properties to the light transmitting electrically conductive layer 4. The metal layer 7 is also a resistance-reducing layer that reduces the surface resistance value of the light transmitting electrically conductive layer 4. The metal layer 7 is also an IR reflective layer for imparting a high IR reflectance (average reflectance of the near infrared ray).

The metal layer 7 has a film shape (including a sheet shape), and is disposed on the upper surface of the first inorganic oxide layer 6 so as to be in contact with the upper surface of the first inorganic oxide layer 6.

The metal that forms the metal layer 7 is not particularly limited as long as the metal has a small surface resistance, and examples thereof include one kind of metal selected from the group consisting of Ti, Si, Nb, In, Zn, Sn, Au, Ag, Cu, Al, Co, Cr, Ni, Pb, Pd, Pt, Cu, Ge, Ru, Nd, Mg, Ca, Na, W, Zr, Ta, and Hf and an alloy containing two or more kinds of metals.

As the metal, preferably, silver (Ag) and a silver alloy are used, more preferably, a silver alloy is used. When the metal is the silver or the silver alloy, the resistance value of the light transmitting electrically conductive layer 4 can be reduced and in addition, the light transmitting electrically conductive layer 4 having a particularly high average reflectance in a near infrared ray region (wavelength of 850 to 2500 nm) is obtained, so that it can be preferably used for the liquid crystal light adjusting element used outdoors.

The silver alloy contains silver as a main component and another metal as an auxiliary component. The metal element of the auxiliary component is not limited. Examples of the silver alloy include Ag-Cu alloy, Ag-Pd alloy, Ag-Pd-Cu alloy, Ag-Pd-Cu-Ge alloy, Ag-Cu-Au alloy, Ag-Cu-In alloy, Ag-Cu-Sn alloy, Ag-Ru-Cu alloy, Ag-Ru-Au alloy, Ag-Nd alloy, Ag-Mg alloy, Ag-Ca alloy, Ag-Na alloy, Ag-Ni alloy, Ag-Ti alloy, Ag-In alloy, and Ag-Sn alloy. In view of moist heat durability, as the silver alloy, preferably, an Ag-Cu alloy, an Ag-Cu-In alloy, an Ag-Cu-Sn alloy, an Ag-Pd alloy, and an Ag-Pd-Cu alloy are used.

The content ratio of the silver in the silver alloy is, for example, 80 mass% or more, preferably 90 mass% or more, more preferably 95 mass% or more, and for example, 99.9 mass% or less. The content ratio of the other metal in the silver alloy is the remaining portion of the above-described content ratio of the silver.

In view of improvement of the transmittance of the light transmitting electrically conductive layer 4, a thickness T3 of the metal layer 7 is, for example, 1 nm or more, preferably 5 nm or more, and for example, 30 nm or less, preferably 20 nm or less, more preferably 10 nm or less. The thickness T3 of the metal layer 7 is, for example, measured by cross-sectional observation with a transmission electron microscope (TEM).

### 7. Second Inorganic Oxide Layer

In the following paragraphs under the chapter "Second Inorganic Oxide Layer" a large number of different layers are mentioned, but only those forming a semicrystalline film having an amorphous portion and a crystalline portion fall within the scope of protection of the appended claims.

The second inorganic oxide layer 8 is a barrier layer that prevents the entry of the water (described later) or the like contained as a solvent in the liquid crystal light adjusting layer 5 into the metal layer 7, and a barrier layer that suppresses the discoloration of the metal layer 7 particularly by the water with time. The second inorganic oxide layer 8 is also an optically adjusting layer for suppressing the visible ray reflectance of the metal layer 7 and improving the visible ray transmittance of the light transmitting electrically conductive layer 4. The second inorganic oxide layer 8, along with the metal layer 7, is preferably an electrically conductive layer that imparts electrically conductive properties to the light transmitting electrically conductive layer 4, more preferably a transparent electrically conductive layer.

The second inorganic oxide layer 8 is the uppermost layer of the light transmitting electrically conductive layer 4, has a film shape (including a sheet shape), and is disposed on the entire upper surface of the metal layer 7 so as to be in contact with the upper surface of the metal layer 7.

An example of the inorganic oxide that forms the second inorganic oxide layer 8 includes an inorganic oxide illustrated in the first inorganic oxide layer 6. Preferably, an indium oxide is used, more preferably, an indium oxide-containing oxide is used, more preferably, an indium oxide-containing oxide having indium (In) as a main metal element is used, further more preferably, an ITO is used.

The inorganic oxide that forms the second inorganic oxide layer 8 may be the same or different from the inorganic oxide that forms the first inorganic oxide layer 6. In view of etching properties and moist heat durability, preferably, the same inorganic oxide as that of the first inorganic oxide layer 6 is used.

When the second inorganic oxide layer 8 is made of the indium oxide-containing oxide, the ratio of the number of atoms contained in the impurity metal element to that of the main metal element In in the second inorganic oxide layer 8 (number of atoms of impurity metal element/number of atoms of In) is the same as or not less than "the number of atoms of impurity metal element/the number of atoms of In" in the first inorganic oxide layer 6 (for example, 0.001 or more).

When the second inorganic oxide layer 8 is made of the ITO, the tin oxide (SnO₂) content contained in the ITO, and the ratio of the number of atoms of Sn to that of In are the same as those of the first inorganic oxide layer 6.

When both of the first inorganic oxide layer 6 and the second inorganic oxide layer 8 are made of the ITO, the tin oxide (SnO₂) content contained in the second inorganic oxide layer 8 is preferably the same as or not less than the tin oxide (SnO₂) content contained in the first inorganic oxide layer 6 (for example, 0.1 mass% or more). To be specific, the ratio (S₂/S₁) of the tin oxide (SnO₂) content (S₂) contained in the second inorganic oxide layer 8 to the tin oxide (SnO₂) content (S₁) contained in the first inorganic oxide layer 6 is, for example, 1.0 or more, preferably 1.2 or more, and for example, 3.0 or less, preferably 2.5 or less.

By setting the tin oxide (SnO₂) content contained in the ITO within the above-described range, a degree of crystallization of the ITO film can be adjusted. In particular, by increasing the tin oxide content in the ITO film, perfect crystallization of the ITO film by heating can be suppressed, and a semicrystalline film can be easily obtained.

The ratio (Sn/In) of the number of atoms of Sn to that of In contained in the second inorganic oxide layer 8 is preferably the same as or not less than the ratio of the number of atoms of Sn to that of In contained in the first inorganic oxide layer 6 (to be specific, 0.001 or more). By setting the tin oxide (SnO₂) content, and the number of atoms of Sn to that of In in the second inorganic oxide layer 8 the same as or not less than those of the first inorganic oxide layer 6, a degree of crystallization of the second inorganic oxide layer 8 can be increased.

The content ratio of the inorganic oxide in the second inorganic oxide layer 8 is, for example, 95 mass% or more, preferably 98 mass% or more, more preferably 99 mass% or more, and for example, 100 mass% or less.

The second inorganic oxide layer 8 contains a crystal particle 10 (ref: FIGS. 2A and 2B). In this manner, a film structure of the crystal particle 10 is stable, and hardly transmits the water, so that the entry of the water (described later) contained as a solvent in the liquid crystal light adjusting layer 5 into the metal layer 7 by passing through the second inorganic oxide layer 8 can be suppressed. Thus, the moist heat durability of the light transmitting electrically conductive layer 4 can be excellent.

To be specific, but not according to the present invention, the second inorganic oxide layer 8 is a crystalline film. The crystalline film may be, for example but not according to the claimed invention, as shown in FIG. 2A, in a side cross-sectional view (in particular, cross-section TEM image), a perfect crystalline film that continuously contains the crystal particle 10 in the entire plane direction. According to the claimed invention, however, as shown in FIG. 2B, the second inorganic oxide layer 8 is a semicrystalline film that contains an amorphous portion 11 (portion that is not crystallized) and a crystalline portion 12 (that is, portion made of the crystal particle 10). In view of containing a second crystal particle 10b to be described later and furthermore excellent moist heat durability, preferably, a semicrystalline film is used.

In the present invention, "containing crystal particles" means that when the second inorganic oxide layer 8 is observed by using a cross-section TEM image at a magnification of 200,000 times, at least one or more crystal particles 10 are observed in a range of 500 nm in the plane direction. In the above-described range, the number of the crystal particle 10 is preferably 2 or more, more preferably 3 or more, further more preferably 5 or more, and preferably 50 or less, more preferably 40 or less, further more preferably 30 or less.

When the upper surface of the second inorganic oxide layer 8 is observed by using a plane TEM image at a magnification of 100,000 times, the area ratio of the crystal particle 10 is, for example, 5% or more, preferably 10% or more, more preferably 20% or more, and for example, 100% or less, preferably 90% or less, more preferably 80% or less, further more preferably 70% or less, particularly preferably 60% or less.

When the area ratio of the crystal particle is calculated with the plane TEM image, the cross-section TEM image of the first inorganic oxide layer 6 is confirmed under the above-described conditions, an absence of the crystal particle in the first inorganic oxide layer 6 is confirmed, and thereafter, the plane TEM image is observed. By only the plane TEM image, it may be difficult to judge that the crystal particle is either in the first inorganic oxide layer 6 or in the second inorganic oxide layer 8. Thus, in the present invention, after confirming an absence of the crystal particle in the first inorganic oxide layer 6 with the cross-section TEM image, by observing the plane TEM image, it is judged that the crystal particle 10 in the second inorganic oxide layer 8 can be observed.

The size of the crystal particle 10 contained in the second inorganic oxide layer 8 is, for example, 3 nm or more, preferably 5 nm or more, more preferably 10 nm or more, and for example, 200 nm or less, preferably 100 nm or less, more preferably 80 nm or less, further more preferably 50 nm or less. In the observed area of the second inorganic oxide layer 8, a crystal particle other than the above-described range may be contained, and the area ratio thereof is preferably 30% or less, more preferably 20% or less. More preferably, all of the crystal particles 10 contained in the second inorganic oxide layer 8 are made of the crystal particle having a size within the above-described range. When the second inorganic oxide layer 8 is observed by using a cross-section TEM image at a magnification of 200,000 times, the size of the crystal particle 10 is the maximum value of the length capable of being obtained by each of the crystal particles 10.

The size of the largest crystal particle 10 (maximum crystal particle) of the crystal particles 10 contained in the second inorganic oxide layer 8 is, for example, 10 nm or more, preferably 20 nm or more, and for example, 200 nm or less, preferably 100 nm or less.

The shape of the crystal particle is not limited, and examples thereof include a generally triangular shape when viewed in cross section and a generally rectangular shape when viewed in cross section.

Examples of the crystal particle 10 include a first crystal particle 10a that goes through the second inorganic oxide layer 8 in the thickness direction and the second crystal particle 10b that does not go through the second inorganic oxide layer 8 in the thickness direction.

The first crystal particle 10a is a crystal particle that grows so that the upper end thereof is exposed from the upper surface of the second inorganic oxide layer 8 and the lower end thereof is exposed from the lower surface of the second inorganic oxide layer 8. The length in the thickness direction of the first crystal particle 10a is the same as the thickness of the second inorganic oxide layer 8.

The second crystal particle 10b is a crystal particle that grows so that at least one end of the upper end and the lower end is not exposed from the surface (the upper surface or the lower surface) of the second inorganic oxide layer 8. The second crystal particle 10b is formed so that preferably, the upper end thereof is exposed from the upper surface of the second inorganic oxide layer 8, and the lower end thereof is not exposed from the lower surface of the second inorganic oxide layer 8.

The average of the length in the thickness direction of the second crystal particle 10b is shorter than the thickness (T2) of the second inorganic oxide layer 8, and with respect to 100% of the thickness of the second inorganic oxide layer 8 is, for example, 98% or less, preferably 90% or less, more preferably 80% or less, and for example, 5% or more, preferably 10% or more, more preferably 20% or more.

The second inorganic oxide layer 8 preferably contains the second crystal particle 10b. In this manner, a particle boundary of the crystal particle 10 does not go through in the thickness direction, so that it can be suppressed that the water passes through the second inorganic oxide layer 8 in the thickness direction along the particle boundary.

The number of the first crystal particle 10a is, for example, 0 or more, preferably 1 or more, and for example, 30 or less, preferably 10 or less.

The number of the second crystal particle 10b is preferably larger than that of the first crystal particle 10a, and to be specific, preferably 1 or more, more preferably 2 or more, further more preferably 3 or more, and preferably 50 or less, more preferably 40 or less, further more preferably 30 or less.

The thickness T2 of the second inorganic oxide layer 8 is, for example, 5 nm or more, preferably 20 nm or more, further more preferably 30 nm or more, and for example, 100 nm or less, preferably 60 nm or less, more preferably 50 nm or less. When the thickness T2 of the second inorganic oxide layer 8 is within the above-described range, the visible ray transmittance of the light transmitting electrically conductive layer 4 can be easily adjusted to a high standard. The thickness T2 of the second inorganic oxide layer 8 is, for example, measured by cross-sectional observation with a transmission electron microscope (TEM).

The ratio (T2/T1) of the thickness T2 of the second inorganic oxide layer 8 to the thickness T1 of the first inorganic oxide layer 6 is, for example, 0.5 or more, preferably 0.75 or more, and for example, 1.5 or less, preferably 1.25 or less. When the ratio (T2/T1) is the above-described lower limit or more and the above-described upper limit or less, the deterioration of the metal layer 7 can be furthermore suppressed under the moist heat environment.

The ratio (T2/T3) of the thickness T2 of the second inorganic oxide layer 8 to the thickness T3 of the metal layer 7 is, for example, 2.0 or more, preferably 3.0 or more, and for example, 10 or less, preferably 8.0 or less.

### 8. Liquid Crystal Light Adjusting Layer

The liquid crystal light adjusting layer 5 is a light adjusting layer that changes a light transmittance and a color by applying an electric field to the light transmitting electrically conductive layer 4.

The liquid crystal light adjusting layer 5 is the uppermost layer of the liquid crystal light adjusting member 1, has a film shape (including a sheet shape), and is disposed on the entire upper surface of the light transmitting electrically conductive layer 4 so as to be in contact with the upper surface of the light transmitting electrically conductive layer 4.

The liquid crystal light adjusting layer 5 contains a liquid crystal material, and preferably contains a liquid crystal capsule.

As the liquid crystal material, a known material is used, and examples thereof include nematic liquid crystal molecule, smectic liquid crystal molecule, and cholesteric liquid crystal molecule.

These liquid crystal materials can be used alone or in combination of two or more.

The liquid crystal capsule is a minute particle and includes the above-described liquid crystal material.

The liquid crystal material and the liquid crystal capsule are dispersed by a transparent resin and/or a dispersant. That is, the liquid crystal material and the liquid crystal capsule are preferably dispersed by a polymer emulsion.

The transparent resin is a matrix resin that disperses the liquid crystal material and the liquid crystal capsule, and a known resin material is used. The transparent resin is not particularly limited, and examples thereof include acrylic resin, epoxy resin, and urethane resin. These transparent resins can be used alone or in combination of two or more.

Examples of the solvent include water; aromatic hydrocarbon compounds such as benzene, toluene, xylene, methoxybenzene, and 1,2-dimethoxybenzene; halogenated hydrocarbon compounds such as chloroform, dichloromethane, carbon tetrachloride, dichloroethane, tetrachloroethane, trichloroethylene, tetrachloroethylene, chlorobenzene, and orthodichlorobenzene; phenolic compounds such as phenol and parachlorophenol; ether compounds such as diethyl ether, dibutyl ether, tetrahydrofuran, anisole, dioxane, and tetrahydrofuran; ketone compounds such as acetone, methyl isobutyl ketone, methyl ethyl ketone, cyclohexanone, cyclopentanone, 2-pentanone, 3-pentanone, 2-hexanone, 3-hexanone, 2-heptanone, 3-heptanone, 4-heptanone, 2,6-dimethyl-4-heptanone, 2-pyrrolidone, and N-methyl-2-pyrrolidone; and alcoholic compounds such as n-butanol, 2-butanol, cyclohexanol, isopropyl alcohol, t-butyl alcohol, glycerin, ethylene glycol, triethylene glycol, ethylene glycol monomethyl ether, diethylene glycol dimethyl ether, propylene glycol, dipropylene glycol, and 2-methyl-2,4-pentane diol. Of these, in view of emulsion forming, preferably, an alcoholic compound and water are used, more preferably, water is used. These solvents can be used alone or in combination of two or more.

These transparent resins and solvents can be used alone or in combination of two or more, and preferably, the water is used as a solvent.

In the liquid crystal light adjusting layer 5, preferably, the refractive index of the transparent resin and/or the solvent is adjusted to be the same as that of a liquid crystal molecule in a major axis direction.

When the electric field is not applied, the liquid crystal molecule included in the liquid crystal capsule is aligned along the inner wall of the liquid crystal capsule. Thus, an orientation direction of the liquid crystal molecule is ununiform, and inconsistency of the refractive index occurs on the interface between the liquid crystal capsule and the transparent resin and/or the solvent, so that the light scatters. In this manner, the liquid crystal light adjusting layer 5 becomes opaque.

When the electric filed is applied, the liquid crystal molecule included in the liquid crystal capsule is aligned in parallel with the direction of the electric field. The refractive index of the transparent resin and/or the solvent is adjusted so as to be the same as that of the liquid crystal molecule in the major axis direction, so that the inconsistency of the refractive index does not occur on the interface between the liquid crystal capsule and the transparent resin. In this manner, the liquid crystal light adjusting layer 5 becomes transparent.

The thickness of the liquid crystal light adjusting layer 5 is, for example, 0.1 µm or more and 5000 µm or less.

### 9. Light Transmitting Electrically Conductive Film

Of the members that constitute the liquid crystal light adjusting member 1, the transparent substrate 2, the protecting layer 3, and the light transmitting electrically conductive layer 4 constitute one embodiment of the light transmitting electrically conductive film 9 of the present invention.

That is, as shown in FIG. 3, the light transmitting electrically conductive film 9 is a laminate film that sequentially includes the transparent substrate 2, the protecting layer 3, and the light transmitting electrically conductive layer 4 in the thickness direction. That is, the light transmitting electrically conductive film 9 includes the transparent substrate 2, the protecting layer 3 that is disposed at the upper side of the transparent substrate 2, and the light transmitting electrically conductive layer 4 that is disposed at the upper side of the protecting layer 3. Preferably, the light transmitting electrically conductive film 9 is made of only the transparent substrate 2, the protecting layer 3, and the light transmitting electrically conductive layer 4.

The light transmitting electrically conductive film 9 forms a film shape (including a sheet shape) having a predetermined thickness, extends in the plane direction, and has a flat upper surface and a flat lower surface. The light transmitting electrically conductive film 9 is a component for fabricating the liquid crystal light adjusting member 1, and to be specific, an electrode substrate used for the liquid crystal light adjusting member 1. The light transmitting electrically conductive film 9 does not include the liquid crystal light adjusting layer 5, and is an industrially available device whose component alone can be circulated. The light transmitting electrically conductive film 9 is a film through which the visible ray transmits, and includes a transparent electrically conductive film.

The light transmitting electrically conductive film 9 may be the light transmitting electrically conductive film 9 that is thermally contracted, or may be the light transmitting electrically conductive film 9 that is unheated, that is, uncontracted. In view of excellent bending resistance, preferably, the light transmitting electrically conductive film 9 that is thermally contracted is used.

The total thickness of the light transmitting electrically conductive film 9 is, for example, 2 µm or more, preferably 20 µm or more, and for example, 300 µm or less, preferably 200 µm or less, more preferably 150 µm or less.

### 10. Producing Method of Liquid Crystal Light Adjusting Member

Next, a method for producing the liquid crystal light adjusting member 1 is described.

To produce the liquid crystal light adjusting member 1, first, the light transmitting electrically conductive film 9 is fabricated, and next, the liquid crystal light adjusting layer 5 is disposed on the light transmitting electrically conductive film 9.

The light transmitting electrically conductive film 9 is, for example, obtained by disposing the protecting layer 3 and the light transmitting electrically conductive layer 4 on the transparent substrate 2 in the above-described order.

In this method, as referred to FIG. 1, first, the transparent substrate 2 is prepared.

The water content of the transparent substrate 2 (polymeric film) is not limited, and is, for example, 10 µg/cm² or more, preferably 15 µg/cm² or more, and for example, 200 µg/cm² or less, preferably 170 µg/cm² or less. When the water content is the above-described lower limit or more, a hydrogen atom or the like is imparted to the first inorganic oxide layer 6, the crystallization of the first inorganic oxide layer 6 is suppressed by heating to be described later, and the amorphous properties of the first inorganic oxide layer 6 can be easily retained. When the water content is the above-described upper limit or less, the second inorganic oxide layer 8 containing the crystal particle 10 can be surely obtained by a heating step or the like. The water content of the transparent substrate 2 is measured in conformity with JIS K 7251 (in 2002) B method-moisture vaporization method.

The water content contained in the transparent substrate 2 (polymeric film) with respect to the transparent substrate 2 content is, for example, 0.05 mass% or more, preferably 0.1 mass% or more, and for example, 1.5 mass% or less, preferably 1.0 mass% or less, more preferably 0.5 mass% or less.

A part or all of the above-described water is emitted to the outside by a degassing treatment to be described later.

Next, a resin composition is, for example, disposed on the upper surface of the transparent substrate 2 by a wet process.

To be specific, first, the resin composition is applied to the upper surface of the transparent substrate 2. Thereafter, when the resin composition contains an active energy ray curable resin, an active energy ray is applied.

In this manner, the protecting layer 3 in a film shape is formed on the entire upper surface of the transparent substrate 2. That is, a protecting layer-including transparent substrate that includes the transparent substrate 2 and the protecting layer 3 is obtained.

Thereafter, the protecting layer-including transparent substrate is subjected to the degassing treatment as needed.

To subject the protecting layer-including transparent substrate to the degassing treatment, the protecting layer-including transparent substrate is left to stand under a reduced pressure atmosphere of, for example, 1 × 10⁻¹ Pa or less, preferably 1 × 10⁻² Pa or less, and for example, 1 × 10⁻⁶ Pa or more. The degassing treatment is, for example, performed by using an exhauster (to be specific, turbomolecular pump or the like) provided in a dry process device.

By the degassing treatment, a part of the water contained in the transparent substrate 2 and a part of an organic substance contained in the protecting layer 3 are emitted to the outside.

Next, the light transmitting electrically conductive layer 4 is, for example, disposed on the upper surface of the protecting layer 3 by a dry process.

To be specific, each of the first inorganic oxide layer 6, the metal layer 7, and the second inorganic oxide layer 8 is sequentially disposed by the dry process.

Examples of the dry process include vacuum deposition method, sputtering method, and ion plating method. Preferably, a sputtering method is used. To be specific, a magnetron sputtering method is used.

An example of a gas used in the sputtering method includes an inert gas such as Ar. Also, a reactive gas such as oxygen can be used in combination as needed. When the reactive gas is used in combination, the flow ratio of the reactive gas is not particularly limited, and the ratio of the flow rate of the reactive gas to that of the inert gas is, for example, 0.1/100 or more, preferably 1/100 or more, and for example, 5/100 or less.

To be specific, in forming the first inorganic oxide layer 6, as the gas, preferably, the inert gas and the reactive gas are used in combination. In forming the metal layer 7, as the gas, preferably, the inert gas is used alone. In forming the second inorganic oxide layer 8, as the gas, preferably, the inert gas and the reactive gas are used in combination.

When the first inorganic oxide layer 6 and the second inorganic oxide layer 8 contain indium oxide, a resistance behavior of each of the layers changes depending on an introduction amount of the reactive gas, and in a graph of the introduction amount of the reactive gas (x axis) - the surface resistance value (y axis), a parabola in a downward convex is depicted. At this time, an amount of the reactive gas contained in the first inorganic oxide layer 6 and the second inorganic oxide layer 8 is preferably an introduction amount in which the resistance value is around the minimum value (that is, inflection point of the parabola), and to be specific, is preferably an introduction amount of ± 20% of the introduction amount in which the resistance value is the minimum value.

When the sputtering method is used, as a target material, the above-described inorganic oxide or the above-described metal that constitutes each of the layers is used.

A power source used in the sputtering method is not limited, and for example, a DC power source, a MF/AC power source, and a RF power source are used alone or in combination of two or more. Preferably, a DC power source is used.

When the first inorganic oxide layer 6 is formed by the sputtering method, preferably, the transparent substrate 2 (and the protecting layer 3) is cooled. To be specific, the lower surface of the transparent substrate 2 is brought into contact with a cooling device (for example, cooling roll) or the like, and the transparent substrate 2 (and the protecting layer 3) is cooled. In this manner, when the first inorganic oxide layer 6 is formed, a large amount of water contained in the transparent substrate 2 and a large amount of organic substance contained in the protecting layer 3 are emitted by vapor deposition heat or the like generated by the sputtering, and it can be suppressed that the water is excessively contained in the first inorganic oxide layer 6. The cooling temperature is, for example, -30°C or more, preferably -10°C or more, and for example, 60°C or less, preferably 40°C or less, more preferably 30°C or less, further more preferably 20°C or less, particularly preferably below 0°C. Preferably, the first inorganic oxide layer 6, the metal layer 7, and the second inorganic oxide layer 8 are formed by the sputtering, while cooled within the above-described temperature range. In this manner, the aggregation of the metal layer 7, and the excessive oxidation of the second inorganic oxide layer 8 can be suppressed.

In this manner, the light transmitting electrically conductive layer 4 in which the first inorganic oxide layer 6, the metal layer 7, and the second inorganic oxide layer 8 are sequentially formed in the thickness direction is formed on the protecting layer 3, so that a light transmitting electrically conductive laminate is obtained. At this time, both of the first inorganic oxide layer 6 and the second inorganic oxide layer 8 immediately after the film forming (for example, within 24 hours after forming the light transmitting electrically conductive layer laminate) do not contain the crystal particle 10.

Next, when the second inorganic oxide layer 8 contains the crystal particle 10, a crystallization step of generating the crystal particle 10 in the second inorganic oxide layer 8 is performed. The crystallization step is not limited as long as the crystal particle 10 can be formed, and for example, a heating step is used, that is, the light transmitting electrically conductive laminate is heated.

The heating step is not only the heating for the purpose of generating the above-described crystal particle 10, but also may be heating performed incidentally along with curl removing of the light transmitting electrically conductive layer laminate and dry forming of a silver paste wire.

The heating temperature can be appropriately set, and is, for example, 30°C or more, preferably 40°C or more, more preferably 80°C or more, and for example, 180°C or less, preferably 150°C or less.

The heating time is not limited, and set in accordance with the heating temperature. The heating time is, for example, 1 minute or more, preferably 10 minutes or more, more preferably 30 minutes or more, and for example, 4000 hours or less, preferably 100 hours or less.

The heating may be performed under an air atmosphere, an inert atmosphere, or a vacuum atmosphere, and in view of easy crystallization, preferably, the heating is performed under an air atmosphere.

By the heating step, the second inorganic oxide layer 8 is crystalized, and the crystal particle 10 is present at the inside of the second inorganic oxide layer 8. In particular, when the second inorganic oxide layer 8 contains the crystal particle 10, the metal layer 7 that is interposed between the transparent substrate 2 and the second inorganic oxide layer 8 barriers the water from the transparent substrate 2 and the organic substance from the protecting layer 3 that interrupt the crystallization, and easily incorporate oxygen that is necessary for the crystallization by being exposed at the time of the heating step, so that the crystallization of the second inorganic oxide layer 8 can be easily performed. The first inorganic oxide layer 6 is largely influenced by the water and the organic substance, and cannot easily incorporate the oxygen, so that the growth of the crystal particle 10 is interrupted, and the amorphous properties are retained.

In this manner, as shown in FIG. 1, the light transmitting electrically conductive film 9 that sequentially includes the transparent substrate 2, the protecting layer 3, and the light transmitting electrically conductive layer 4 (the first inorganic oxide layer 6, the metal layer 7, and the second inorganic oxide layer 8) in the thickness direction, and in which only the second inorganic oxide layer 8 contains the crystal particle 10 is obtained.

Next, the liquid crystal light adjusting layer 5 is disposed in the light transmitting electrically conductive film 9.

A known material can be used for the liquid crystal light adjusting layer 5.

The liquid crystal light adjusting layer 5 is disposed on the upper surface of the light transmitting electrically conductive film 9 so that the liquid crystal light adjusting layer 5 is in contact with the second inorganic oxide layer 8.

In this manner, as shown in FIG. 1, the liquid crystal light adjusting member 1 that sequentially includes the transparent substrate 2, the protecting layer 3, the light transmitting electrically conductive layer 4, and the liquid crystal light adjusting layer 5 in the thickness direction is obtained.

The above-described producing method can be also performed by a roll-to-roll method. Also, a part or all of the method can be performed by a batch method.

The light transmitting electrically conductive layer 4 can be also formed into a pattern shape such as wiring pattern by etching as needed.

### 11. Function and Effect

According to the liquid crystal light adjusting member 1, the light transmitting electrically conductive layer 4 includes the metal layer 7 having a high reflectance in the near infrared ray region. Thus, the light transmitting electrically conductive layer 4 has, for example, a higher average reflectance of the near infrared ray compared to a case of being made of only an electrically conductive oxide; is capable of efficiently shielding a heat ray such as the sunlight from the liquid crystal light adjusting layer 5; and is capable of being used in the environment influenced by the sunlight (outdoors or the like).

According to the liquid crystal light adjusting member 1, the light transmitting electrically conductive layer 4 has electrically conductive properties, so that it can be used as an electrode. Furthermore, the liquid crystal light adjusting member 1 has excellent near infrared ray reflectance properties without bonding an IR reflective layer to the surface of the transparent substrate 2. Thus, the thickness of the liquid crystal light adjusting member 1 can be reduced, and the production cost can be also reduced.

The liquid crystal light adjusting member 1 has excellent near infrared ray reflectance properties without bonding an IR reflective layer to the surface of the transparent substrate 2. Thus, the thickness of the liquid crystal light adjusting member 1 can be reduced, and the production cost can be also reduced.

According to the liquid crystal light adjusting member 1, the light transmitting electrically conductive layer 4 includes the second inorganic oxide layer 8 containing the crystal particle 10. Thus, when the liquid crystal light adjusting layer 5 contains water as a solvent, the entry of the water into the metal layer 7 by passing through the second inorganic oxide layer 8 in the thickness direction can be suppressed.

According to the liquid crystal light adjusting member 1, the second inorganic oxide layer 8 is the semicrystalline film having the amorphous portion 11 and the crystalline portion 12. Thus, the moist heat durability is furthermore excellent.

According to the light transmitting electrically conductive film 9, the light transmitting electrically conductive layer 4 includes the metal layer 7 having a high reflectance in the near infrared ray region. Thus, when the light transmitting electrically conductive film 9 is used for the above-described liquid crystal light adjusting member 1, the light transmitting electrically conductive layer 4 has, for example, a higher average reflectance of the near infrared ray compared to a case of being made of only an electrically conductive oxide; is capable of efficiently shielding a heat ray such as the sunlight from the liquid crystal light adjusting layer 5; and is capable of being used in the environment influenced by the sunlight (outdoors or the like).

In the light transmitting electrically conductive film 9, the light transmitting electrically conductive layer 4 has electrically conductive properties, so that it can be used as an electrode. Furthermore, the light transmitting electrically conductive film 9 has excellent near infrared ray reflectance properties without bonding an IR reflective layer to the surface of the transparent substrate 2. Thus, the thickness of the light transmitting electrically conductive film 9 can be reduced, and the production cost can be also reduced.

### 12. Liquid Crystal Light Adjusting Element

A liquid crystal light adjusting element 13 forms a film shape (including a sheet shape) having a predetermined thickness, extends in a predetermined direction perpendicular to the thickness direction (the front-rear direction and the right-left direction, that is, the plane direction), and has a flat upper surface and a flat lower surface (two main surfaces). The liquid crystal light adjusting element 13 is, for example, one component of a light adjusting panel or the like provided in a light adjusting device, that is, not the light adjusting device. That is, the liquid crystal light adjusting element 13 is a component for fabricating the light adjusting device or the like, does not include a light source such as LED and an external power source, and is an industrially available device whose component alone can be circulated.

To be specific, as shown in FIG. 4, the liquid crystal light adjusting element 13 is a laminate film that includes the liquid crystal light adjusting member 1 and an electrode substrate (upper-side electrode substrate) 14. That is, the liquid crystal light adjusting element 13 includes the liquid crystal light adjusting member 1 and the electrode substrate 14 that is disposed at the upper side of the liquid crystal light adjusting member 1. Preferably, the liquid crystal light adjusting element 13 is made of only the liquid crystal light adjusting member 1 and the electrode substrate 14. In the following, each of the layers is described in detail.

The electrode substrate 14 is the above-described light transmitting electrically conductive film 9, and sequentially includes the light transmitting electrically conductive layer 4, the protecting layer 3, and the transparent substrate 2 in the thickness direction. The electrode substrate 14 is disposed at the upper side of the liquid crystal light adjusting member 1. To be specific, the electrode substrate 14 is disposed on the entire upper surface (surface opposite to the transparent substrate 2 of the lower-side light transmitting electrically conductive film 9) of the liquid crystal light adjusting layer 5 so that the upper surface of the liquid crystal light adjusting layer 5 is in contact with the lower surface of the light transmitting electrically conductive layer 4.

That is, in the liquid crystal light adjusting element 13, the two light transmitting electrically conductive films 9 are disposed to face each other so that each of the light transmitting electrically conductive layers 4 is in contact with the surface (the lower surface or the upper surface) of the liquid crystal light adjusting layer 5.

The liquid crystal light adjusting element 13 includes the above-described liquid crystal light adjusting member 1. Thus, the liquid crystal light adjusting element 13 is capable of efficiently shielding a heat ray such as the sunlight from the liquid crystal light adjusting layer 5, and is capable of being used in the environment influenced by the sunlight (outdoors or the like).

The liquid crystal light adjusting element 13 includes the above-described liquid crystal light adjusting member 1. Thus, the thickness of the liquid crystal light adjusting element 13 can be reduced, and the production cost can be also reduced.

### 13. Modified Example

In the modified example, the same reference numerals are provided for members and steps corresponding to each of those in the above-described embodiment, and their detailed description is omitted.

In one embodiment of the liquid crystal light adjusting member 1, as shown in FIG. 1, the protecting layer 3 is interposed between the transparent substrate 2 and the first inorganic oxide layer 6. Alternatively, for example, as shown in FIG. 5, the first inorganic oxide layer 6 can be also directly disposed on the upper surface of the transparent substrate 2. That is, the liquid crystal light adjusting member 1 sequentially includes the transparent substrate 2, the light transmitting electrically conductive layer 4, and the liquid crystal light adjusting layer 5 in the thickness direction. Meanwhile, the liquid crystal light adjusting member 1 does not include the protecting layer 3.

In one embodiment of the liquid crystal light adjusting member 1, as shown in FIG. 1, the first inorganic oxide layer 6 is directly disposed on the upper surface of the protecting layer 3. Alternatively, for example, as shown in FIG. 6, an inorganic substance layer 15 can be also interposed between the protecting layer 3 and the first inorganic oxide layer 6.

The inorganic substance layer 15, along with the protecting layer 3, is also an optically adjusting layer that adjusts optical properties of the liquid crystal light adjusting member 1 so as to suppress visual recognition of the wiring pattern in the light transmitting electrically conductive layer 4. The inorganic substance layer 15 has a film shape (including a sheet shape), and is disposed on the entire upper surface of the protecting layer 3 so as to be in contact with the upper surface of the protecting layer 3. The inorganic substance layer 15 has predetermined optical properties, and is prepared from, for example, an inorganic substance such as oxide and fluoride. The thickness of the inorganic substance layer 15 is, for example, 1 nm or more, preferably 5 nm or more, more preferably 10 nm or more, and for example, 200 nm or less, preferably 80 nm or less, more preferably 40 nm or less, further more preferably 25 nm or less.

In one embodiment of the liquid crystal light adjusting member 1, as shown in FIG. 1, the light transmitting electrically conductive layer 4 includes only the first inorganic oxide layer 6, the metal layer 7, and the second inorganic oxide layer 8. Alternatively, for example, though not shown, furthermore, a second metal layer and a third inorganic oxide layer can be also sequentially disposed on the upper surface of the second inorganic oxide layer 8. Moreover, a third metal layer and a fourth inorganic oxide layer can be also disposed on the upper surface of the third inorganic oxide layer.

Although not shown, for example, a functional layer such as antifouling layer, adhesion layer, water repellant layer, reflection preventing layer, and oligomer preventing layer can be also disposed on the upper surface and/or the lower surface of the transparent substrate 2.

The functional layer preferably contains the above-described resin composition, more preferably is made of a resin composition.

Also, an insulating layer (not shown) (preferably, the thickness thereof is 50 nm or less) may be disposed in the entire space or a part thereof between the light transmitting electrically conductive layer 4 and the liquid crystal light adjusting layer 5. The insulating layer is, for example, made of a resin composition, an inorganic oxide, or the like.

In one embodiment of the liquid crystal light adjusting member 1, as shown in FIG. 1, the liquid crystal light adjusting member 1 includes the transparent substrate 2, and the transparent substrate 2 may be bonded to another colored substrate (not shown). For example, a polarizer and a polarizing film may be disposed on the opposite side to the light transmitting electrically conductive layer 4 of the transparent substrate 2. The polarizer and the polarizing film can be, for example, bonded to the transparent substrate 2 via a pressure-sensitive adhesive layer or an adhesive layer.

The functional layer may be appropriately selected in accordance with a required function.

In the above-described modified example, the liquid crystal light adjusting member 1 is described, and the light transmitting electrically conductive film 9 and the liquid crystal light adjusting element 13 are the same.

In the liquid crystal light adjusting element 13, as shown in FIG. 4, as the upper-side electrode substrate 14, the light transmitting electrically conductive film 9 of the present invention is used. Alternatively, for example, though not shown, the upper-side electrode substrate 14 can be also constituted from the transparent substrate 2 and a single electrically conductive layer. Examples of the single electrically conductive layer include ITO film (crystalline ITO film, amorphous ITO film), IGO film, and 1GZO film.

### Examples

In the following, the present invention is further described based on Examples and Comparative Examples. However, only Example 1 and Production Example 1 fall within the scope of protection of the appended claims. On the other hand, Examples 2, 3 and Production Examples 2, 3 as well as the Comparative Examples do not fall within the scope of protection of the appended claims. The present invention is however limited only by the appended claims. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF

### EMBODIMENTS".

### [Light Transmitting Electrically Conductive Film]

### Example 1

### (Preparation of Film Substrate and Forming of Protecting Layer)

First, a transparent substrate that was made of a long polyethylene terephthalate (PET) film and having a thickness of 50 µm was prepared.

Next, an ultraviolet ray curable resin that was made of an acrylic resin was applied to the upper surface of the transparent substrate to cure by the application of the ultraviolet ray, so that a protecting layer made of a curable resin layer and having a thickness of 2 µm was formed. In this manner, a protecting layer-including transparent substrate roll including the transparent substrate and the protecting layer was obtained.

### (Forming of First Inorganic Oxide Layer)

Next, the protecting layer-including transparent substrate roll was set in a vacuum spat device to be then vacuum-evacuated until an atmospheric pressure at the time of non-conveyance was 2 × 10⁻³ Pa (degassing treatment). At this time, in a state of not introducing a sputtering gas (Ar and O₂), a part of the protecting layer-including transparent substrate was conveyed, and it was confirmed that the atmospheric pressure increased until 1 × 10⁻² Pa. In this manner, it was confirmed that a sufficient amount of gas remained in the protecting layer-including transparent substrate roll.

Next, a first inorganic oxide layer made of an amorphous ITO and having a thickness of 40 nm was formed on the upper surface of the curable resin layer by sputtering, while the protecting layer-including transparent substrate roll was delivered.

To be specific, under a vacuum atmosphere at an atmospheric pressure of 0.2 Pa in which Ar and O₂ were introduced (as flow ratio, Ar: O₂ = 100: 3.8), a target made of a sintered body of 12 mass% of tin oxide and 88 mass% of indium oxide was sputtered by using a direct-current (DC) power source.

When the first inorganic oxide layer was formed by sputtering, the lower surface of the protecting layer-including transparent substrate roll (to be specific, the lower surface of the transparent substrate) was brought into contact with a cooling roll at -5°C, so that the protecting layer-including transparent substrate roll was cooled.

### (Forming of Metal Layer)

A metal layer made of an Ag alloy and having a thickness of 8 nm was formed on the upper surface of the first inorganic oxide layer by sputtering.

To be specific, under a vacuum atmosphere at an atmospheric pressure of 0.4 Pa into which Ar was introduced, an Ag alloy (manufactured by Mitsubishi Materials Corporation, part number: "No. 317") was sputtered by using a direct-current (DC) power source as a power source.

### (Forming of Second Inorganic Oxide Layer)

A second inorganic oxide layer made of an ITO and having a thickness of 38 nm was formed on the upper surface of the metal layer by sputtering.

To be specific, under a vacuum atmosphere at an atmospheric pressure of 0.2 Pa in which Ar and O₂ were introduced (as flow ratio, Ar: O₂ = 100: 4.0), an ITO target made of a sintered body of 12 mass% of tin oxide and 88 mass% of indium oxide was sputtered by using a direct-current (DC) power source.

Thereafter, a heating step was performed under the conditions of an air atmosphere at 80°C for 12 hours. In this manner, the second inorganic oxide layer was crystallized.

In this manner, a light transmitting electrically conductive film in which the protecting layer, the first inorganic oxide layer, the metal layer, and the second inorganic oxide layer were sequentially formed on the transparent substrate in the thickness direction was obtained.

### Example 2

A light transmitting electrically conductive film of Example 2 was obtained in the same manner as that of Example 1, except that the flow ratio of Ar to O₂ was changed to "Ar: O₂ = 100: 3.1", and the second inorganic oxide layer was formed by sputtering an ITO target made of a sintered body of 12 mass% of tin oxide and 88 mass% of indium oxide.

### Example 3

A light transmitting electrically conductive film of Example 3 was obtained in the same manner as that of Example 1, except that the heating step in the second inorganic oxide layer was not performed.

### Comparative Example 1

A light transmitting electrically conductive film of Comparative Example 1 was obtained in the same manner as that of Example 1, except that the flow ratio of Ar to O₂ at the time of sputtering was changed to "Ar: O₂ = 100: 1.0", the thickness of the second inorganic oxide layer was changed to that described in Table 1, a light transmitting electrically conductive layer was formed without forming a first inorganic oxide layer and a metal layer, and thereafter, a heating step was performed under an air atmosphere at 140°C for 1 hour.

### [Liquid Crystal Light Adjusting Element]

### (Production Example 1)

The light transmitting electrically conductive film of Example 1 and the light transmitting electrically conductive film of Comparative Example 1 were prepared. Next, a coating liquid in which a nematic liquid crystal and a resin were mixed was prepared. Next, the coating liquid was applied to the upper surface of the light transmitting electrically conductive film of Example 1, and a liquid crystal light adjusting layer was formed. Thereafter, the light transmitting electrically conductive film of Comparative Example 1 was laminated on the upper surface of the liquid crystal light adjusting layer, so that a liquid crystal light adjusting element of Production Example 1 was produced.

After removing the liquid crystal light adjusting layer of the end portion of the obtained liquid crystal light adjusting element, an electrically conducive copper foil pressure-sensitive adhesive tape (manufactured by Teraoka Seisakusho Co., Ltd., trade name: No. 8323) was bonded to a portion in which the liquid crystal light adjusting layer was removed, and an electrical voltage was applied thereto. Then, a change in the transparency was visually recognized by a presence or absence of an electric field, and it was confirmed that the liquid crystal light adjusting element functioned as a light adjusting element.

### (Production Example 2)

A liquid crystal light adjusting element of Production Example 2 was produced in the same manner as that of Production Example 1, except that the light transmitting electrically conductive film of Example 1 was changed to the light transmitting electrically conductive film of Example 2.

### (Production Example 3)

A liquid crystal light adjusting element of Production Example 3 was produced in the same manner as that of Production Example 1, except that the light transmitting electrically conductive film of Example 1 was changed to the light transmitting electrically conductive film of Example 3.

### (Production Comparative Example 1)

A liquid crystal light adjusting element of Production Comparative Example 1 was produced in the same manner as that of Production Example 1, except that the two light transmitting electrically conductive films of Comparative Example 1 were prepared to be laminated so that each of the light transmitting electrically conductive layers was in contact with the surface (the upper surface or the lower surface) of the liquid crystal light adjusting layer.

### (Measurement)

### (1) Thickness

The thickness of the protecting layer, the first inorganic oxide layer, the metal layer, and the second inorganic oxide layer was measured by cross-sectional observation by using a transmission electron microscope (manufactured by Hitachi, Ltd., HF-2000). The thickness of the transparent substrate was measured by using a film thickness meter (manufactured by Ozaki MFG. CO., LTD., digital dial gauge DG-205).

### (2) Observation of Crystal Particle with Cross-Section TEM

A cross-section of the first inorganic oxide layer and the second inorganic oxide layer was observed by using a transmission electron microscope (manufactured by Hitachi, Ltd., HF-2000, magnification of 200,000 times). The number of crystal particle per 500 nm in a distance of the plane direction of the cross-sectional view at this time was counted. The length of the maximum crystal particle of the crystal particle generated in the inorganic oxide layer was measured. The results are shown in Table 1.

### (3) Observation of Crystal Particle with Plane TEM

In each of the light transmitting electrically conductive films of Examples and Comparative Examples in which the crystal particle was confirmed by cross-section TEM, by using a transmission electron microscope (manufactured by Hitachi, Ltd., "H-7650"), the upper surface of the second inorganic oxide layer was observed, and a plane image at a magnification of 100,000 times was obtained. Next, the ratio of the area of the crystal particle (crystallized portion) with respect to that of the entire second inorganic oxide layer was measured. The results are shown in Table 1. In Example 1, the number of the second crystal particle was larger than that of the first crystal particle.

### (4) Moist Heat Durability

Each of the light transmitting electrically conductive films of Examples and Comparative Examples was cut into a piece having a size of 10 cm × 10 cm, a pressure-sensitive adhesive layer (manufactured by NITTO DENKO CORPORATION, "CS9904U") was formed on the light transmitting electrically conductive layer to be bonded to a glass substrate, and thereafter, the obtained laminate was left to stand under the conditions of 60°C and 95%RH for 240 hours. Thereafter, the upper surface of the light transmitting electrically conductive layer of the center portion of 8 cm × 8 cm was visually observed.

At this time, the appearance evaluation was performed based on the following criteria.
Excellent: a white dot defect (aggregation, rotten portion) was not observed (0).
Good: the number of white dot defect is above 0 and 5 or less.
Bad: the number of white dot defect is above 5.

The results are shown in Table 1.

### (5) Near Infrared Ray Reflectance Properties

As for each of the light transmitting electrically conductive films of Examples and Comparative Examples, the average reflectance of the near infrared ray (wavelength of 850 to 2500 nm) was measured.

At this time, the evaluation of the average reflectance was performed based on the following criteria.
Good: the average reflectance is 30% or more.
Poor: the average reflectance is 15% or more and below 30%.
Bad: the average reflectance is below 15%.

The results are shown in Table 1.

### [Table 1]

**Table 1**

| | **Thickness** | | | **Presence or Absence of Crystal Particle with TEM Cross-Sectional Observation** | | | **Maximum Crystal Particle in Second Inorganic Oxide Layer (nm)** | **Ratio of Crystallization with Plane Observation (%)** | **Moist Heat Durability** | **Near Infrared Ray Reflectance Properties** |
|---|---|---|---|---|---|---|---|---|---|---|
| | **First Inorganic Oxide Layer (T1) (nm)** | **Metal Layer (T3) (nm)** | **Second Inorganic Oxide Layer (T2) (nm)** | **First Inorganic Oxide Layer** | **Second Inorganic Oxide Layer** | **Second inorganic Oxide Layer** | | | | **Average Reflectance** |
| **Ex. 1** | **40** | **8** | **38** | **Absence** | **Presence** | **Semicrystalline (12 pieces)** | **50** | **40** | **Excellent** | **Good** |
| **Ex. 2** | **40** | **8** | **38** | **Absence** | **Presence** | **Perfect Crystal** | **55** | **100** | **Good** | **Good** |
| **Ex. 3** | **6** | **6** | **28** | **Absence** | **Absence** | **-** | **-** | **-** | **Bad** | **Good** |
| **Comp. Ex. 1** | **65** | **-** | **-** | **Presence** | **Presence** | **Semicrystalline** | **80** | **10** | **Good** | **Bad** |

While the illustrative embodiments of the present invention are provided in the above description, such is for illustrative purpose only and it is not to be construed as limiting the scope of the present invention defined by the appended claims.

### Industrial Applicability

The liquid crystal light adjusting member and the liquid crystal light adjusting element of the present invention can be applied in various industrial products, and can be, for example, used for various uses such as window glasses for buildings and vehicles, partitions, and the interior decoration.

### Description of Reference Numerals

- 1: Liquid crystal light adjusting member
- 2: Transparent substrate
- 4: Light transmitting electrically conductive layer
- 5: Liquid crystal light adjusting layer
- 6: First inorganic oxide layer
- 7: Metal layer
- 8: Second inorganic oxide layer
- 9: Light transmitting electrically conductive film
- 13: Liquid crystal light adjusting element

## Claims

1. A liquid crystal light adjusting member (1) sequentially comprising:
a transparent substrate (2), a light transmitting electrically conductive layer (4), and a liquid crystal light adjusting layer (5), wherein
the light transmitting electrically conductive layer (4) sequentially includes a first inorganic oxide layer (6), a metal layer (7), and a second inorganic oxide layer (8),
**characterized in that** the first inorganic oxide (6) is an amorphous layer and includes indium tin composite oxide, and **in that** the second inorganic oxide layer (8) is a semicrystalline film having an amorphous portion and a crystalline portion.

2. A liquid crystal light adjusting element (13) comprising:
the liquid crystal light adjusting member (1) according to claim 1 and
an electrode substrate (14) provided on a surface opposite to the liquid crystal light adjusting layer (5) with respect to the transparent substrate (2).

## Patentansprüche

1. Flüssigkristall-Lichteinstellvorrichtung (1), der Reihe nach umfassend:
ein transparentes Substrat (2), eine lichtdurchlässige, elektrisch leitende Schicht (4) und eine Flüssigkristall-Lichteinstellschicht (5), wobei
die lichtdurchlässige, elektrisch leitende Schicht (4) der Reihe nach eine erste anorganische Oxidschicht (6), eine Metallschicht (7) und eine zweite anorganische Oxidschicht (8) enthält,
**dadurch gekennzeichnet, dass** das erste anorganische Oxid (6) eine amorphe Schicht ist und Indium-Zinn-Verbundoxid enthält, und
dass die zweite anorganische Oxidschicht (8) ein halbkristalliner Film mit einem amorphen Teil und einem kristallinen Teil ist.

2. Flüssigkristall-Lichteinstellelement, umfassend:
das Flüssigkristall-Lichteinstellvorrichtung (1) nach Anspruch 1 und
ein Elektrodensubstrat (14), bereitgestellt auf einer Oberfläche gegenüber der Flüssigkristall-Lichteinstellschicht (5) in Bezug auf das transparente Substrat (2).

## Revendications

1. Dispositif de réglage de lumière à cristaux liquides (1) comprenant séquentiellement :
un substrat transparent (2), une couche électroconductrice transmettant la lumière (4) et une couche de réglage de lumière à cristaux liquides (5), dans lequel
la couche électroconductrice transmettant la lumière (4) comprend séquentiellement une première couche d'oxyde inorganique (6), une couche métallique (7) et une deuxième couche d'oxyde inorganique (8),
**caractérisé en ce que** le premier oxyde inorganique (6) est une couche amorphe et comprend de l'oxyde composite d'indium et d'étain, et
**en ce que** la deuxième couche d'oxyde inorganique (8) est un film semi-cristallin comportant une portion amorphe et une portion cristalline.

2. Élément de réglage de lumière à cristaux liquides (13) comprenant :
le dispositif de réglage de lumière à cristaux liquides (1) selon la revendication 1 et un substrat d'électrode (14) pourvu sur une surface opposée à la couche de réglage de lumière à cristaux liquides (5) par rapport au substrat transparent (2).
